# EUROPEAN PATENT SPECIFICATION

(11) **EP 1 498 169 B1**
(45) Date of publication and mention of the grant of the patent: **16.06.2010**
(21) Application number: 04007588.9
(22) Date of filing: 28.09.1999
(51) Int. Cl.: B01D 35/30, B01D 27/08

(54) **Filtration module**
Filtrationsmodul
Module de filtration

(30) Priority: 09.10.1998 US 103646 P
(43) Date of publication of application: 19.01.2005
(62) Divisional of application: 99949906.4
(73) Proprietor: ENTEGRIS, INC., Chaska, MN 55318 (US)
(72) Inventor: Stankowski, Ralph, J., Westford MA 01886 (US); Milcetich, Johnn, L., Naples FL 34105-5640 (US)
(74) Representative: Henkel, Feiler & Hänzel

(56) References cited:
- DE-A- 19 527 844
- DE-A- 19 623 681
- US-A- 5 114 572
- US-A- 5 770 054

## Description

### BACKGROUND OF THIS INVENTION

The present invention relates to membrane filtration modules that are more sanitary and are easier to replace and install than presently available filtration modules. More particularly, the present invention relates to membrane filtration modules formed from a filtration cartridge, retaining bowl and manifold together.

The control of particulate contaminants in a filtration process such as in the semiconductor industry requires the use of ultraclean filters having membranes that remove submicron particles. It is well known that any particle that is deposited on a semiconductor wafer produces a defect when the particle is sufficiently large. Typically in the semiconductor industry, failed defects can be produced by particles as small as about one tenth of the smallest features of the semiconductor chip. Therefore, membrane filters are used in every process step for producing semiconductor chips to purify both working liquids and gases.

Although many different designs have been developed for a filtration module used in an ultrapure liquid filtration, two designs are prevalent. In one module design, liquid to be filtered flows from one end of the filtration module to the other end. In this class of the filtration modules, the feed and permeate connections are located at opposite ends of the filter thereby forcing the liquid flow to move from one end to the other. This flow configuration is referred to as an in line flow configuration. These filtration modules suffer from two disadvantages. First, they are more difficult to connect to the p rocess equipment since the module is sandwiched between two sets of connections. Second, any free liquid remaining within the module quickly d rains upon disconnection of the module because at least one connection is p ositioned at the bottom of the module.

A second filtration modular design locates all of the connections at the same end of the module. In this type of module, the feed and permeate ports are typically horizontally oriented at the top or "head" end of the module on opposite sides thereof. Due to their shape, these modules are referred to as having a T, L or U configuration. This configuration facilitates connection of the head to the remaining portion of the filtration module comprising the bowl and the filtration cartridge positioned within the bowl. In this design, the bowl and filtration cartridge comprise separate elements. Thus, when constructing the filtration module, the filtration cartridge and the bowl are separately secured to and sealed to the manifold head. In addition, upon completion of filtration the bowl and cartridge are separately removed from the head. This separate removal requires that the bowl be moved a distance substantially greater than the entire length of the cartridge in order to expose the cartridge to permit its removal. Thereafter, the exposed cartridge is removed by hand or with a hand tool. Since the filter cartridge is saturated with the liquid being filtered which is often times corrosive or toxic, the cartridge removal step presents a danger to the worker. In addition, since the bowl must be moved the length of the cartridge, the space within which the bowl and cartridge are positioned must accommodate this removal step.

It has been proposed in U.S.-A-5,114,572 to provide a filter assembly which cooperates with a bowl to produce a filter cartridge-bowl construction which can be demounted as a single unit from a manifold. The filter cartridge is connected to the bowl by bayonet connections on the cartridge which fit into grooves within the interior surface of the bowl. This bayonet connection requires the flanges extending from the outside surface of the filter cartridge be positioned into grooves that extend vertically within the bowl and then into grooves which extend horizontally within the bowl. The connection configuration requires that the cartridge first be moved vertically into the vertical grooves and then be rotated into the horizontal grooves when mounting the cartridge into the bowl. Conversely, when it is desired to remove the cartridge from the bowl upon completion of a filtration process, the cartridge must be rotated and lifted from the bowl in a single motion. Since removal of the cartridge from the bowl requires application of force on the fluid conduit located at the top of the cartridge, and since the diameter of this conduit is smaller than the cartridge diameter there is no leverage of the application force on the cartridge. This, in turn, requires application of considerable force on the cartridge when effecting its removal from the bowl that may require the use of hand held tool. The application of a rotational force and a lifting force as a single motion increases the difficulty of separating the bowl from the filter cartridge. Separation of the cartridge from the bowl is particularly difficult when toxic or corrosive fluids have been filtered by this filtration device.

Further, current designs have the cartridge seal against and be lightly (friction fit) held to the manifold. Any application of back pressure when applied to the cartridge can cause the cartridge to unseat from the manifold, rendering it ineffective for filtration.

Accordingly, it would be desirable to provide a filtration module construction which avoids the need to remove the filtration cartridge separately than the bowl from the manifold while permitting the filter cartridge and bowl to be removed from a manifold as a single unit. In addition, it would be desirable to provide such a construction that avoids the need for applying force in a plurality of directions of movement to effect removal of a cartridge and bowl from a manifold. Such a construction would promote ease of separating the cartridge and bowl from the manifold, would eliminate the danger to the worker in removing the filtration cartridge subsequent to filtration and would reduce the space required to install the filtration module. Lastly, by forming the cartridge and the bowl as a unitary structure and securing that structure to the manifold, the problem of the cartridge becoming dislodged from the manifold when subjected to back pressure is avoided.

US-A-5601711 discloses a filter device provided especially for the separation of biomaterials from a fluid sample wherein the device comprises a plurality of tubular inline elements assembled in a train by means of complementary connection structures like elastomeric seal, bayonet fittings, snap fittings and the like to form a leakproof passage of a fluid sample volume.

WO 97/47891 discloses a lock-in-place or snap fit connection for two elements of a filter device that are to rotate relative to each other after being so connected.

The filter assembly proposed in US-A-5114572 discussed above uses a filter cartridge where an upper portion of the cartridge is integrally formed with a flange which projects radially outwards therefrom and is fixed to an inner surface of the bowl by means of a bajonett-type connection.

DE-A-19623681 discloses lubricating oil filter for combustion engines in which the filter cartridge is attached to a filter bowl by means of a central supporting tube penetrating the filter cartridge and a collar that is axially snap fit into the central tube and snap fit to an axial protrusion of the bowl. DE-A-19527844 discloses a quite similar structure.

### SUMMARY OF THE INVENTION

In accordance with this invention, a filtration module as defined in claim 1 is provided. The filtration module comprises a manifold, and the combination of a filtration cartridge and bowl wherein the filtration cartridge and bowl are locked together via a collar to be installed and removed as one piece from the manifold. The filter cartridge and bowl are formed from separate pieces and are joined together by application of a force in a single direction at a given time such as force in a single direction at a given time such as a force in a vertical direction. The bowl and filter cartridge are joined together by a snap fit wherein mating elements on the bowl and filter cartridge are shaped so the elements are held together by friction which requires a force to decouple the bowl and filter cartridge. This construction permits the decoupling of the filtration cartridge and bowl from the manifold in one step.

### BRIEF DESCRIPTION OF THE DRAWINGS

Fig. 1 is a cross sectional view of a manifold useful in that present invention.
Fig. 2 is a cross sectional view of an alternative manifold use in the present invention.
Fig. 3 a is an isometric view of a cartridge construction not in accordance with the invention.

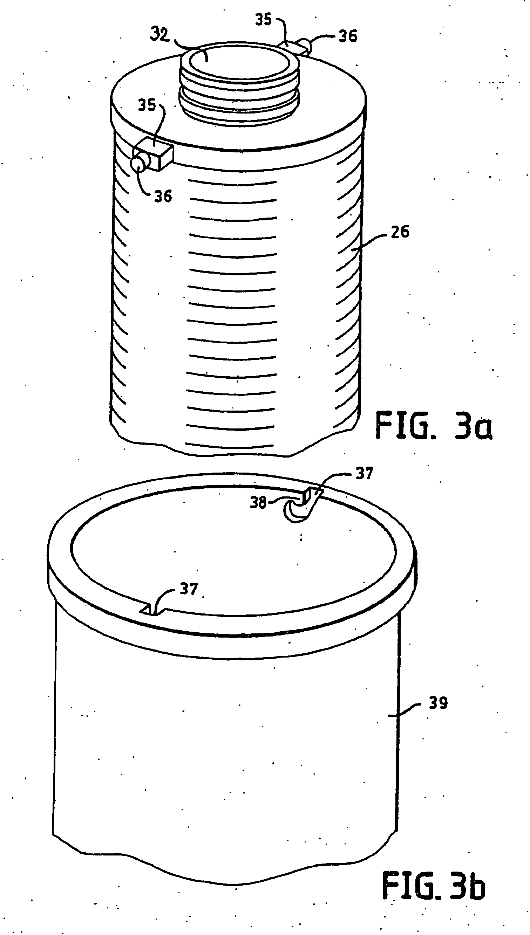

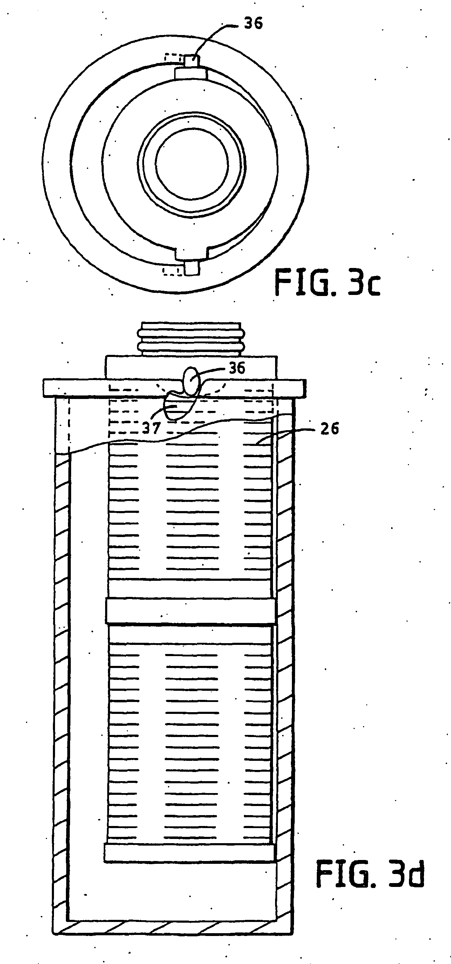

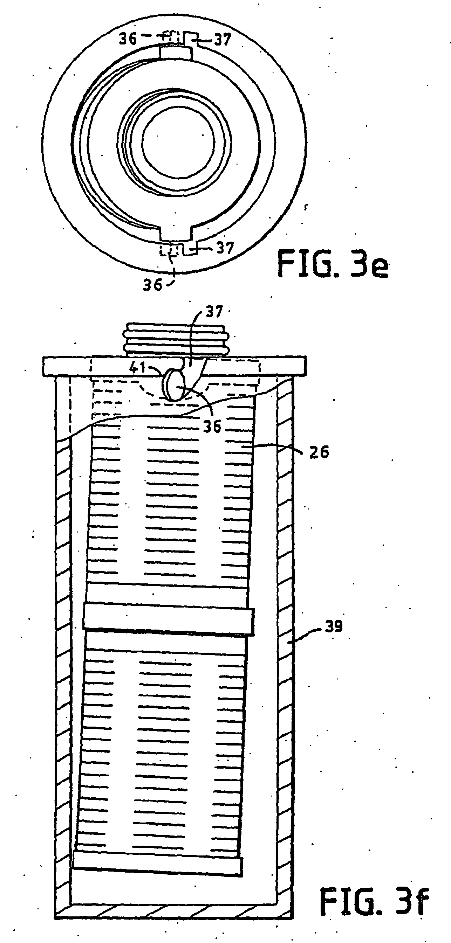

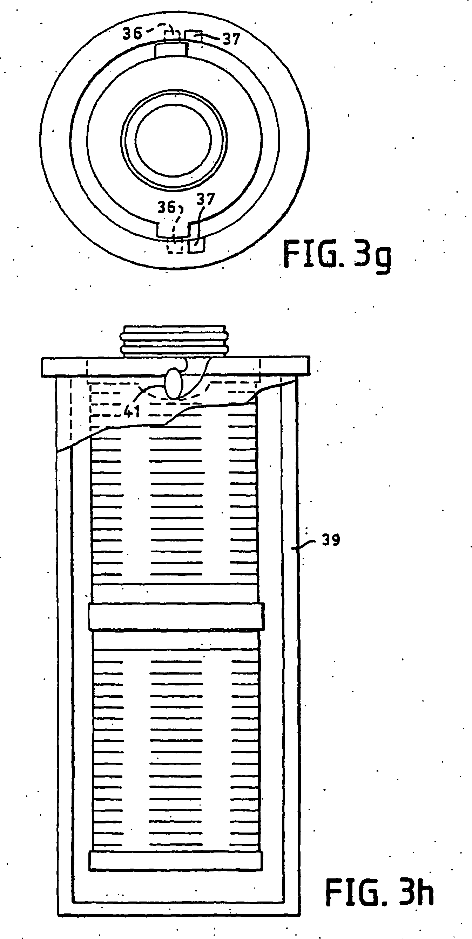

Fig. 3 b is an isometric view of a bowl used in conjunction with the cartridge of Fig. 3 a.
Fig. 3 c is a top view illustrating inserting the cartridge of Fig. 3 a into the bowl of Fig. 3b.
Fig. 3 d is a side cross sectional view of the bowl and cartridge of Fig. 3 c.
Fig. 3 e is a top view illustrating partially inserting the cartridge of Fig. 3a into the bowl of Fig. 3b.
Fig. 3 f is a side cross sectional view of the bowl and cartridge of Fig. 3 e.
Fig. 3 g is a top view illustrating fully inserting the cartridge of Fig. 3 a a into the bow of Fig. 3 b.
Fig. 3 h is a side cross sectional view of the bowl and cartridge of Fig. 3 g.

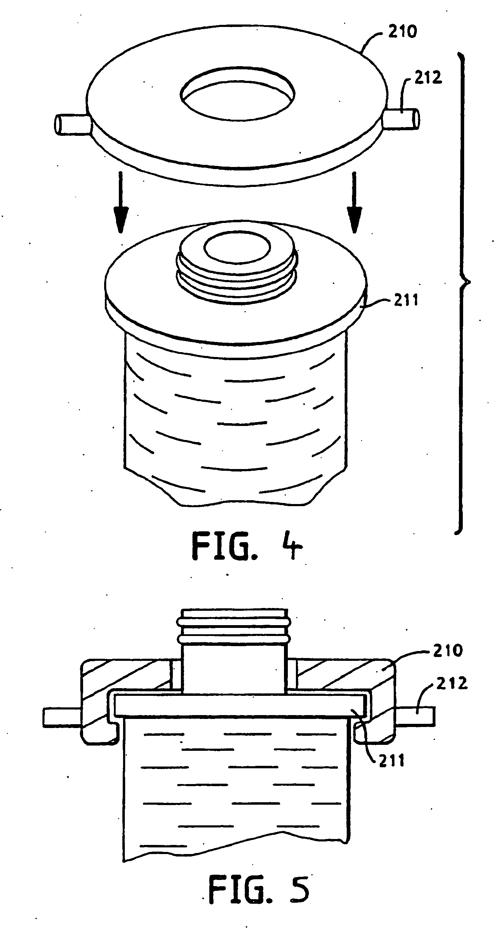

Fig. 4 is planar view of another embodiment of the present invention.
Fig. 5 is a cross sectional view showing the filtration module of Fig. 4.

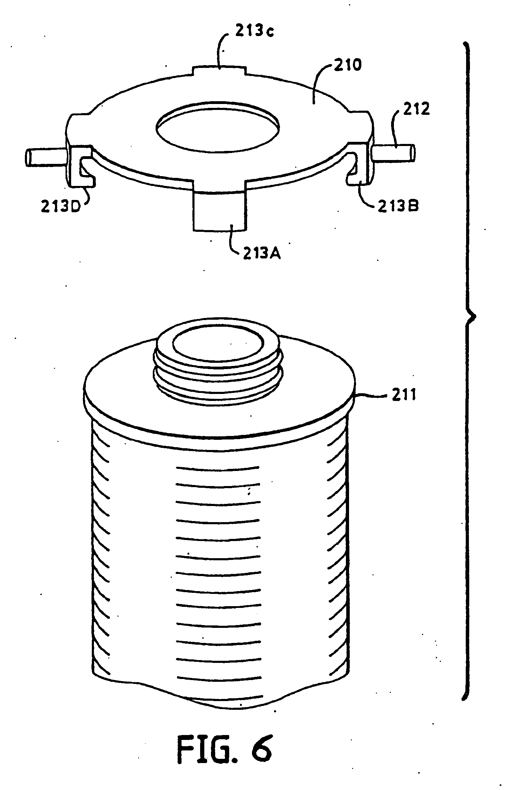

Fig. 6 is planar view of a modification of the embodiment of Fig. 4.

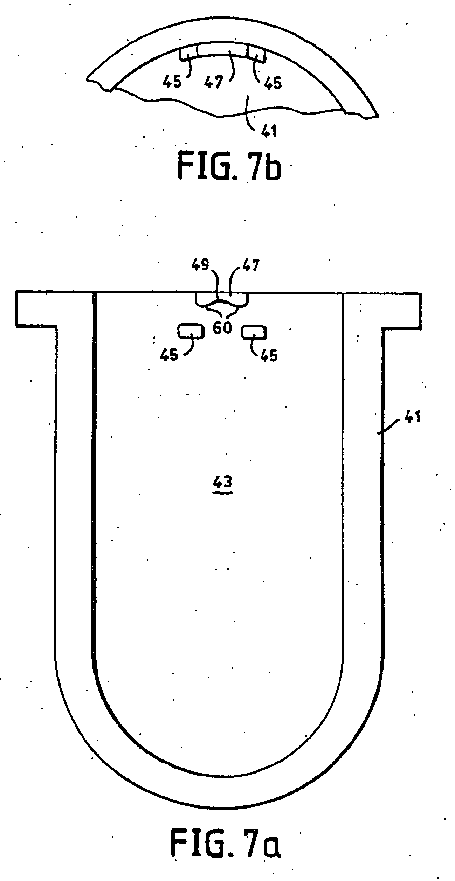

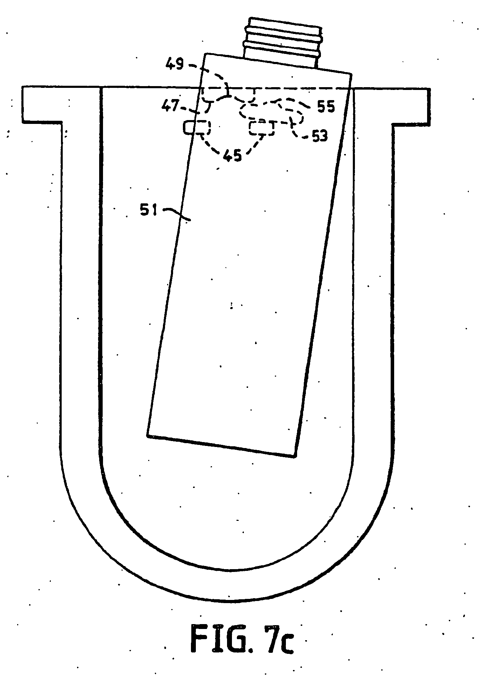

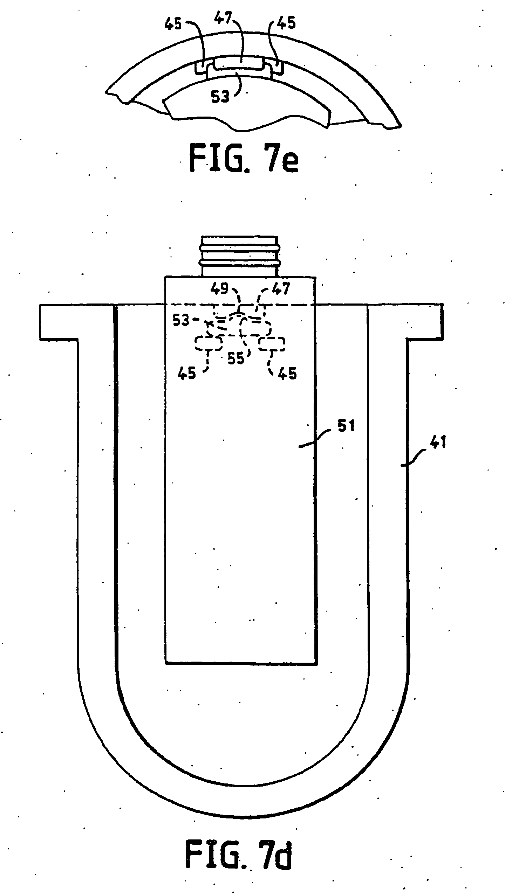

Fig. 7 a is a cross sectional view of an alternative bowl construction not in accordance with the invention.
Fig. 7 b is a partial top view of the bowl of Fig. 7 a.
Fig. 7 c is a cross sectional view of a filter cartridge not in accordance with the invention being positioned into the bowl of Fig. 7 a.
Fig. 7 d is a cross sectional view of the filter cartridge of Fig. 7 c fully positioned into the bowl of Fig. 7 a
Fig. 7 e is a partial top view of the bowl and cartridge of Fig. 7d.

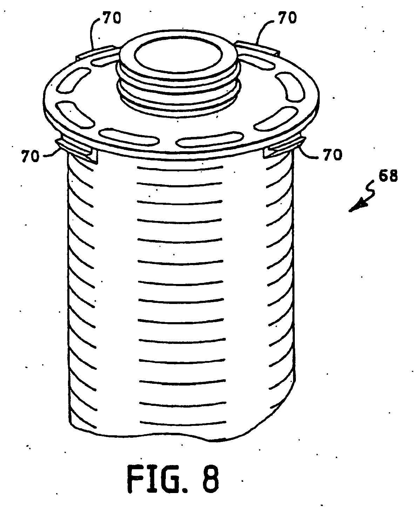

Fig. 8 is an isometric view of a filter cartridge having flanges that snap fit into a bowl.

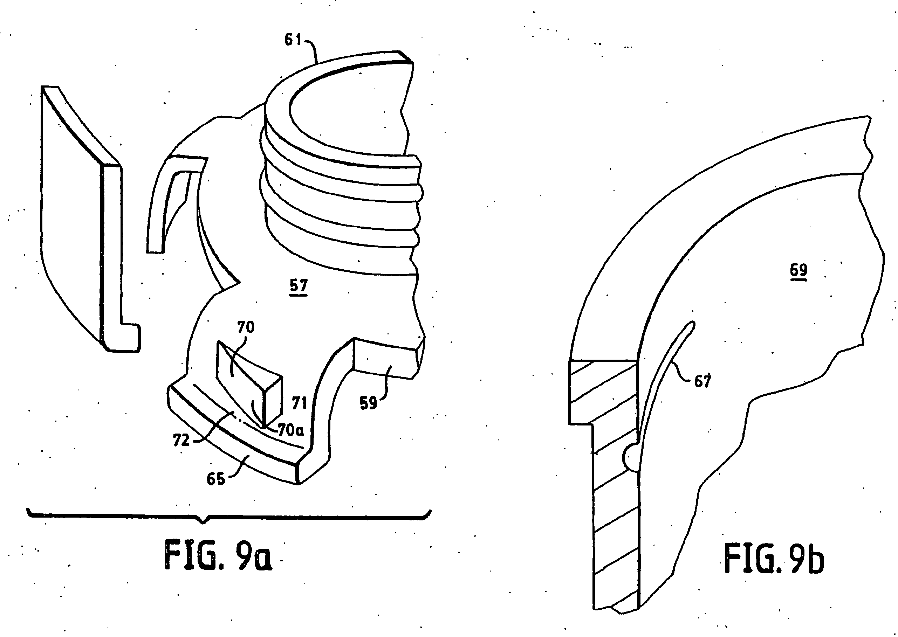

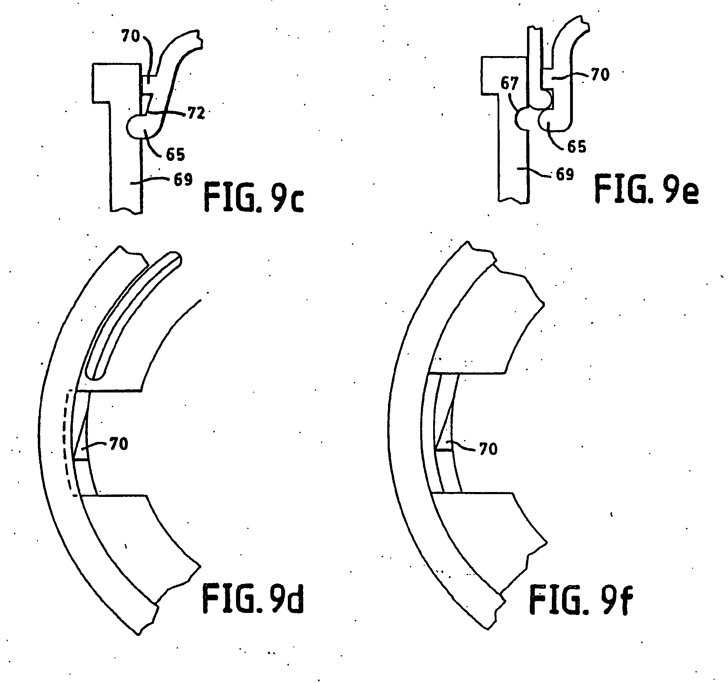

Fig. 9 a is a partial isometric view of a filter cartridge not in accordance with the invention.
Fig. 9 b is a partial isometric view of an inner surface of a bowl into which fits the filter cartridge of Fig. 9 a.
Fig. 9 c is a side view of the cartridge of Fig. 9 a fit into the bowl of Fig. 9 b.
Fig. 9 d is a top view of the construction of Fig. 9 c.
Fig. 9 e is a side view illustrating the separation of the filter cartridge from the bowl of Fig. 9 c.
- Fig. 9 f is a top view of the construction of Fig. 9 e.
Fig. 9 b illustrates a means for separating the filter cartridge of Fig. 9 a from the bowl.

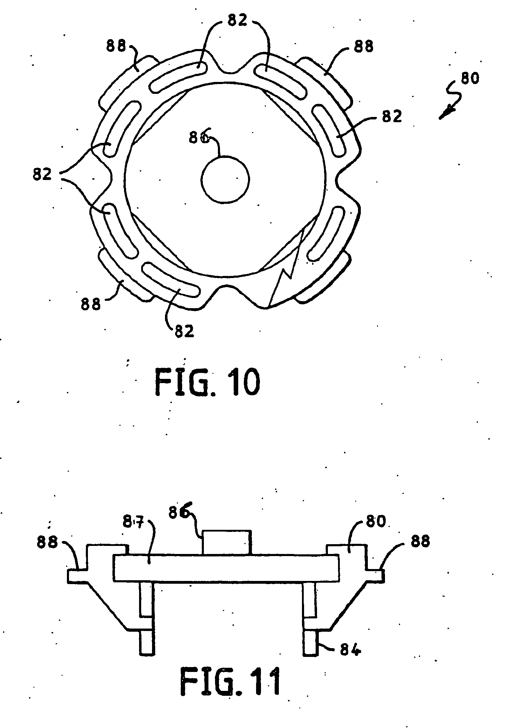

Fig. 10 is a top view of a collar that can be utilized with a filter cartridge to form the filtration module of the invention.
Fig. 11 is a ross sectional view of the collar of fig. 10 positioned about a filter cartridge.

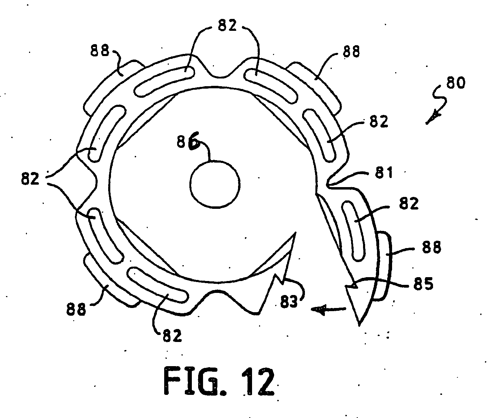

Fig. 12 is a top two of the collar of Fig. 10 when opened.

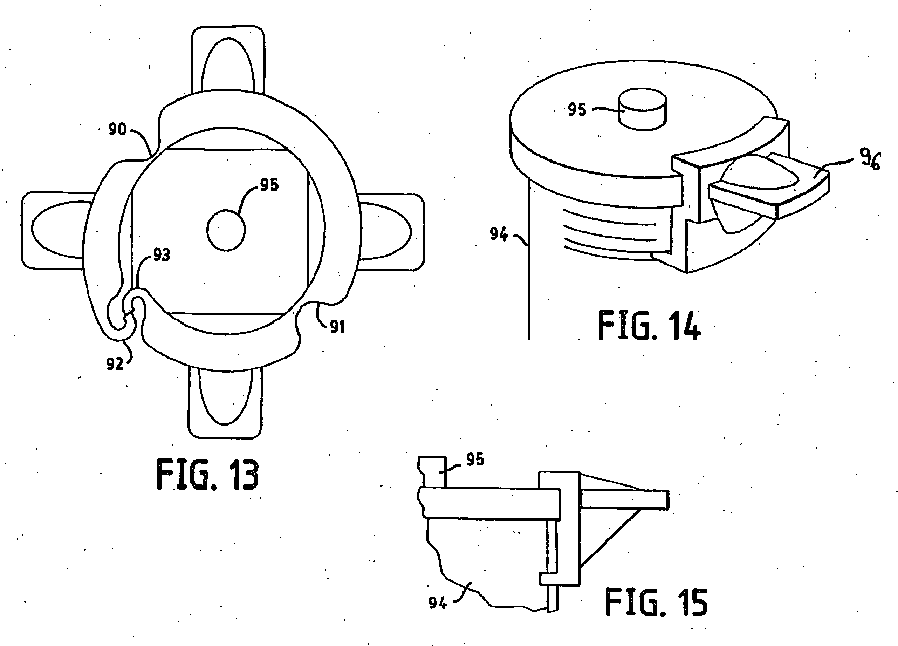

Fig. 13 is a top view of a collar positioned about a filter cartridge.
Fig. 14 is a partial isometric view of a filter cartridge having a partial collar.
Fig. 15 is a partial side view of the collar of Fig. 14.

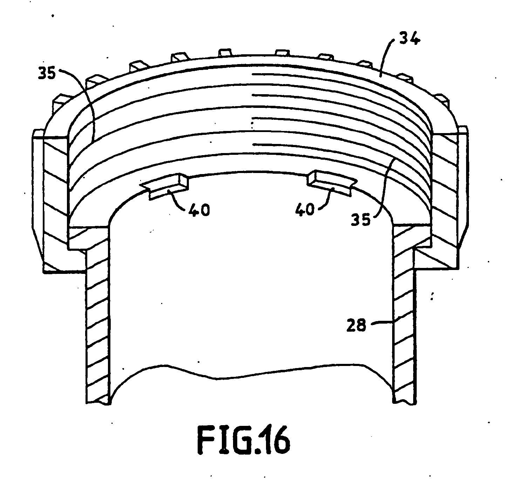

Fig. 16 is a cross sectional view of a bowl including slots for accepting a filter cartridge construction of Fig. 8.

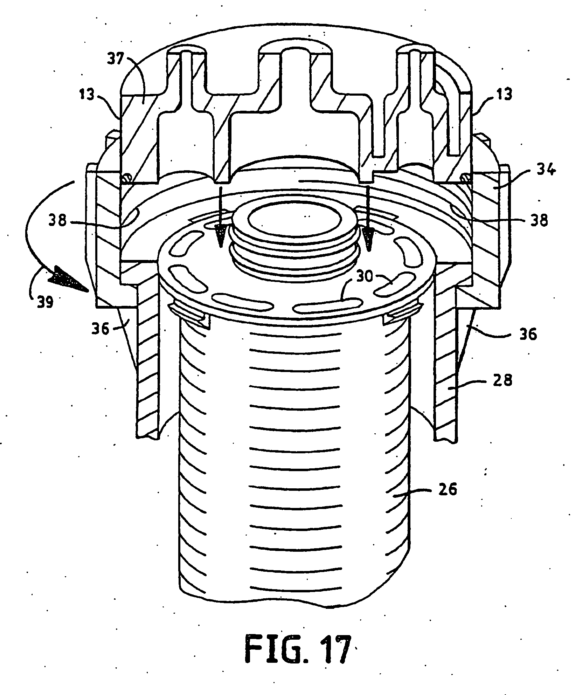

Fig. 17 illustrates the tightening of the filter cartridge of Fig. 8.

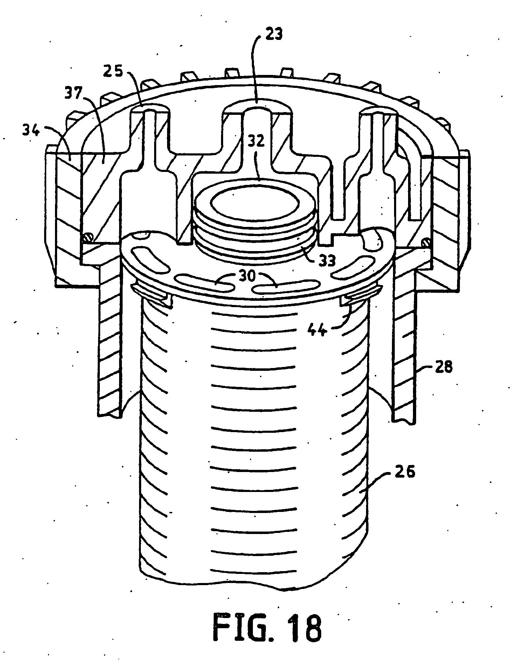

Fig. 18 is a cross sectional view showing the filtration module of Fig. 17.

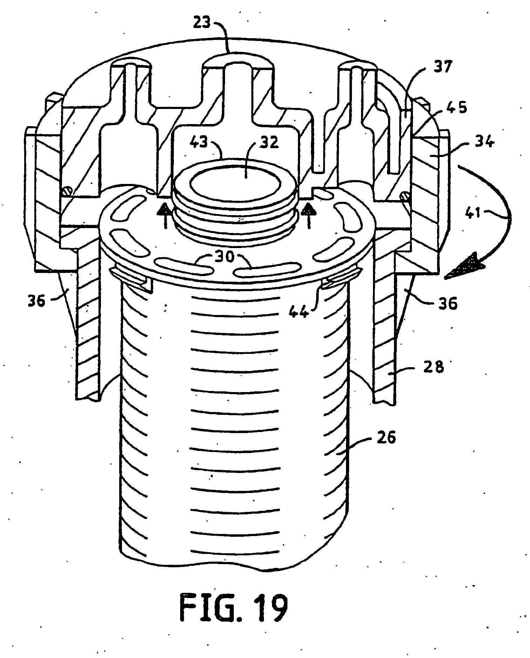

Fig. 19 is a cross sectional view illustrating the removal of the filtration cartridge from a manifold.

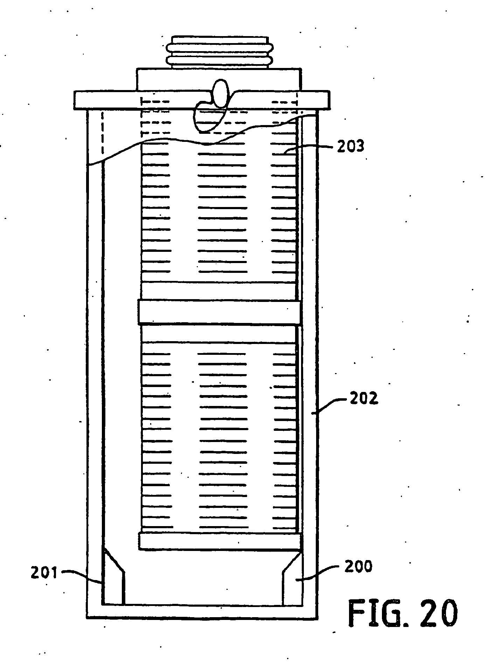

Fig. 20 is a cross sectional view showing the alignment fins in the bowl.

### DESCRIPTION OF SPECIFIC EMBODIMENTS

The present invention provides a filtration module formed of a manifold, a filtration cartridge and a bowl. The manifold provides fluid pathways for fluid feed into the filtration cartridge and permeate removal from the filtration cartridge. The bowl provides a means of storing fluid feed to permit its introduction into the filtration cartridge or to store permeate from the filtration cartridge to be directed to the manifold and then from the filtration module. Fluid feed can be introduced into the filtration cartridge through the manifold either from the outside of the filtration cartridge or from within the interior of the filtration cartridge. The fluid in the bowl adjacent the filtration cartridge can be either fluid feed or permeate. In any event, the fluid feed is introduced from a manifold into the filtration module and permeate is removed from the filtration module from the manifold.

The filter cartridge and bowl are constructed so that they are sealed with the manifold or removed from contact with the manifold as one piece. Thus, the bowl and filter cartridge are formed from two pieces which are interlocked together by moving the bowl and filter cartridge in only one direction relative to each other at a given time. After the bowl and filter cartridge have been connected to the manifold, they are locked together so that, during use in filtering of fluid, they do not become separated.

Subsequent to a filtration, the bowl and filtration cartridge are removed from the manifold as a single piece rather than as two separate pieces. Since the bowl and filtration cartridge are removed together, the filtration cartridge need not be removed from the bowl. Thus, a space substantially equal to the length of the filtration cartridge and the bowl together need not be provided. Only a space as long as substantially the length of the bowl need be provided. This permits one to install a filtration module of this invention within a smaller space as compared to the space required with present filtration modules. In addition, since the filtration cartridge is removed with the bowl, it need not be handled by a worker either by hand or with a hand tool Furthermore, any fluid positioned between the bowl and the filtration cartridge upon completion of filtration need not be removed. This substantially reduces the possibility of contacting fluid within the bowl with a worker. Alternatively, the bowl could contain a drain for removing fluid before removal.

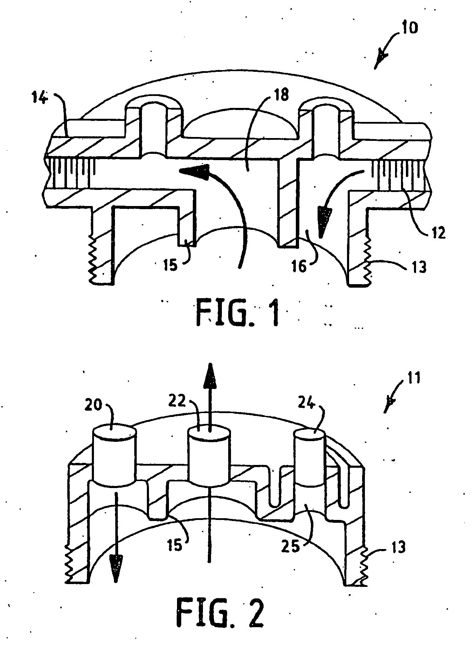

Referring to Fig. 1, the manifold 10 includes an inlet 12, external threads 13 for connecting the bowl and an outlet 14. Fluid passageway 16 permits introduction of feed fluid into a bowl (not shown) and passageway 15 connects the filtration cartridge (not shown) to the outlet 14.

Referring to Fig. 2, the manifold 11 includes an inlet 20 which is in fluid communication with a bowl (not shown) and a permeate outlet 22 which is in fluid communication with a filtration cartridge (not shown) and a gas vent 24 sealed with hydrophobic membrane 25.

Referring to Figs 3 a, 3 b, 3 c, 3 d, 3 e, 3 f, 3 g and 3 h, the filter cartridge 26 having an outlet 32 also has flanges 35 from which extend lugs 36. The lugs as shown in the Figures are oval or ellipsoid in shape, although they can be of any shape suitable for securing the cartridge to the bowl, including circular or polygonal such as square or octogonal. The lugs 36 fit into slots 37 of bowl 39, the slots 37 are provided with a shoulder 38. As shown in Figs 3 c and 3 d, the lugs 36 are positioned into slots 37. As shown in Figs. 3 e and 3 f, the lugs are moved within slots until they contact the shoulders 38. The cartridge 26 is in a position where it is not centered within bowl 39 when the lugs 36 contact shoulder 38. As shown in Figs. 3 g and 3 h, the lugs 36 are positioned at the ends 41 of slot 37 by rotating cartridge 26 so that it is substantially centered within bowl 39. As a result of this rotation, the lugs 36 are snap fit between ends 41 and shoulder 38. While a snap fit is p referred to ensure a good retention, simple interference fitting may also be u sed. When it is desired to separate the cartridge 26 from the bowl 39, the cartridge 26 first is rotated without an additional force in a different direction to the position shown in Figs. 3 e and 3 f to position lugs 36 past shoulder 38. The cartridge 26 then is subjected to a vertical force without an additional force in a different direction to remove the lugs 36 from the slots 37. The shape of the lugs 36 is such that they are slightly larger than the space in the slots 37 at the shoulder 38. Thus, the shoulder 38 holds the lug 36 in position within the slot by friction as a result of the lug being snap fit into the portion of the slot 37 past the shoulder 38.

Referring to Figs. 16 and 8, a construction is illustrated for joining a filter cartridge and a bowl to form an integral unit. The bowl 28 includes the ring 34 and internal threads 35. The bowl 28 also includes slots 40. The flanges 70 of filter cartridge 68 fit into slots 40 so that the flanges are snap fit to be positioned within slots 40. This positioning of the filter cartridge locks it into position and permits the cartridge 68 to be moved as a unit with the bowl 28 away from or in sealing contact with a manifold (not shown).

Referring to Figs 7 a, 7,b, 7 c, and 7 e which are embodiments not in accordance with the invention the bowl 41 includes, on its inner surface 43 two spaced apart flanges 45 and a third flange 47 having a notch 49. A filter cartridge 51 having a flange 53 is first positioned so that flange 53 is positioned between flange 47 and flanges 45 (Fig. 7 c). The cartridge 51 then is slid into the position shown in Fig. 7 d so that flange 53 having shoulder 55 is positioned so that shoulder 55 fits into notch 49 thereby retaining cartridge 51 on bowl 41. It is to be understood that two sets of the flanges shown are positioned about 180 degrees apart on the inside surface 43 of the bowl 42. Since the shoulder 55 is slightly larger than the slight extensions 60 surrounding the notch 49, the shoulder 55 is held in place within notch 49 by friction. Thus, the shoulder 55 is snap fit in notch 49.

Referring to Figs 9 a, 9 b, 9 c, 9 d, 9 e and 9 f the top portion 57 of filter cartridge 59 having fluid outlet or inlet 61 which, in contradiction to the invention includes arms or flanges 65 which are snap fit into slots 67 within the inner surface periphery of a bowl 69. After the arms 65 are snap fit into the slots 67, the bowl 69 and filter cartridge 59 can be seaied into a manifold (not shown) as a single unit. The flange 65 is provided with a wedge shaped element 70 secured to surface 71 and spaced apart from surface 72. When separation of the bowl 69 from the cartridge 59 is desired, a hand held tool can be slid along surface 70a and under wedge 70 to bend flange 65 away from slot to effect removal therefrom.

Referring to Figs 10, 11 and 12, a collar 80 is illustrated which is utilized in accordance with the invention in accordance with the invention in conjunction with a filter cartridge free of a flange which can be snap fit into a slot of a bowl as discussed above. The collar 80 provides the advantage that it can be removed from a used filter cartridge prior to discarding the used cartridge so that the collar 80 can be reused with a fresh filter cartridge. The collar 80 is provided with feed inlets 82 to the bowl 28 (Fig. 16). The collar 80 attaches to a flange 87 of a filter cartridge 84. The collar 80 is provided with flanges 88 that are fit into slots of a bowl as described above. The design of the flanges can be of any design provided they produce the desired retention function. The collar 80 includes a hinge 81 so that a portion of it can be rotated to engage hook elements 83 and 85 to engage or disengage the collar 80 with or from the filter cartridge 84. Permeate is removed from the filter cartridge through outlet 86.

Referring to Figs 13, 14 and 15 an alternative collar construction is shown that includes two hinges 90 and 91 as well as mating hooks 92 and 93. The collar fits about the periphery of filter cartridge 94 which includes a permeate outlet 95. The flanges 96 fit into mating slots of a bowl as described above with reference to Fig. 16.

Figs. 17, 18 and 19 illustrate the installation and removal of the filtration module of this invention shown in with respect to the filter cartridge-bowl construction shown in Fig. 16. As shown in Fig. 17, the threads 38 of ring 34 are contacted with the threads 13 of manifold 37. The ring 34 then is rotated counterclockwise as illustrated by arrow 39 which moves the filter cartridge 26 and bowl 28 toward the manifold 37 until the filter cartridge 26 and bowl 28 are in the position relative to the manifold 37 shown in Fig. 18. This relative movement is achieved by virtue of rotation of the ring 34 and because the ring 34 is supported by the rods 36. The filter cartridge 26 and bowl 28 move as a unit since the filter cartridge is locked into bowl 28 as described above with reference to Fig. 7 a. When in the position shown in Fig. 18, the permeate outlet 32 is sealed in position within permeate outlet 23 of manifold 37 by virtue of the O rings 33. Fluid feed is introduced into the bowl 28 through feed inlet 25, is passed through the filter cartridge 26 and is removed through permeate outlets 32 and 23. Upon completion of filtration, the ring 34 supported by rods 36 is rotated in a clockwise direction as illustrated by arrow 41. This clockwise rotation causes removal of the permeate outlet 32 from contact with the manifold 37. The filter cartridge 26 and bowl 28 are removed as a unit from the manifold 37. Thus only a distance from the top surface 43 of the permeate outlet 32 to the bottom surface 45 of the manifold 37 is needed to effect removal of the filter cartridge at the point of use rather than the distance comprising the entire length of the filter cartridge as required with the filtration modules of the prior art.

Figure 20 shows another embodiment useful in the present invention. In some applications, the cartridge is inserted into the bowl on an angle, such as is shown in Fig. 3 a to 3 h.

One or more alignment fins 200 are formed on the lower inner surface 201 of the bowl 202. Those fins allow the cartridge 203 to be trued in a vertical alignment as it is piaced into the bowl 202. The number of fins 200 used preferably is at least from 2 to 6 with 3 being the most preferred. The fins 200 preferably are equally spaced from each other around the circumference of the inner surface 201. As shown the fins 200 are of a stepped configuration with the upper portion being on angle less than that of vertical and the lower portion being substantially vertical in orientation. This embodiment allows for the cartridge 203 to be easily inserted into the housing and rest adjacent the bottom of the housing. If desired, other arrangements of fins as to angle, length, height may be used and are not critical to the invention so long as they provide adequate mounting and demounting of the cartridge from the housing.

Additionally, the collar feature of the present invention as shown in Figures 10-12 may be comprised of a collar that contains no hinges. Such an embodiment is shown in Figure 4. In this embodiment, the collar 210 is simply snap-fit over the end of the cartridge portion 211 to which it is attached and held in place to the cartridge by the snap-fit design. Further, the design of this embodiment or the embodiment of Figures 10-12 may use the flange as shown in Figures 10-12 or it may use a bayonet or lug 212 as shown in Figure 4 as the means for attaching the cartridge to the housing. The selection of the attachment means is not critical to the invention.

Figure 5 shows the embodiment of Figure 4 in cross section as attached to the cartridge.

Figure 6 shows a second embodiment of the snap fit design of Figures 4 and 5 wherein the portion which extends over and beyond the top of the cartridge is formed of two or more distinct portions 213 A-D.

The selection of filtration media used within the filtration cartridge can be any of those commonly used in the industry. Typically, the media includes but is not limited to of flat sheet membrane, spiral wound flat sheet membrane, pleated flat sheet membrane, spiral pleated flat sheet membrane, hollow fiber membrane, depth filter media such as spiral wound continuous fiber depth filter media, sintered metal filter media, ceramic media, particulate media containing an active capture material such as resin or ceramic beads or a membrane with ligands for removing selected materials from the fluid attached to their surfaces, ion exchange media such as anion resin, cation resin or mixtures of the two alone or incorporated into a membrane structure and combinations of any of these.

This media may be formed of any material typically used in filtration such as paper, other cellulosic materials such as regenerated celluloseor nitrocellulose, glass fiber and fabric, metal such as stainless steel, nickel, chromium and alloys and blends thereof, ceramics, plastics, preferably thermoplastic materials such as polyolefins, homopolymers, copolymers or terpolymers, including polyethylene such as ultrahigh molecular weight polyethylene, polypropylene and the like, PVDF, PTFE resin, PFA, ECTFE and other fluorinated resins, particularly perfluorinated thermoplastic resins, PVC, nylons, polyamides, polysulphones, modified polysulphones such as polyethersulphones, polyarylsulphones and polyphenylsulphones, polyimides, polycarbonates, PET and the like.

Lastly, in all of these embodiments the bowl and manifold may be made of a plastic, preferably a thermoplastic including polyolefins such as polyethylene, ultrahigh molecular weight polyethylene or polypropylene, copolymers or terpolymers of polyolefins, nylons, PTFE resin, PFA, PVDF, ECTFE and other fluorinated resins, particularly perfluorinated thermoplastic resins, polycarbonates, polysulphones, modified polysulphones such as polyethersulphone, polyarylsulphones or polyphenylsulphones, any glass or other reinforced plastic or a metal such as stainless steel, aluminum, copper, bronze, brass, nickel, chromium or titanium or alloys or blends thereof.

## Claims

1. A filtration module which comprises:
a manifold, a filter cartridge (84;94;211) and a bowl (28) which houses the filter cartridge,
wherein said filter cartridge includes a collar (80;210) that extends radially about the periphery of said filter cartridge (84;94;211) and is removably attached to the filter cartridge,
wherein said bowl (28) and said filter cartridge are joined together to form a unitary construction in that said collar (80;210) is fixed to an inner side wall of said bowl (28) by means of a snap fit, and
wherein said filter cartridge (84;94;211) and bowl (28) are in fluid communication with said manifold in a manner which prevents mixing of a fluid feed to said filter cartridge with a permeate removed from said filter cartridge.

2. The filtration module of claim 1, wherein said bowl (28) has slots (40) formed on an inner surface of the bowl (28), and said collar (80) has flanges (88) that snap-fit into the slots (40) of the bowl (28) when the filter cartridge is seated within said bowl (28).

3. The filtration module of claim 1 or 2 which includes an inlet (82) for fluid feed to said bowl and an outlet (86;95) for permeate from said filter cartridge.

4. The filtration module of claim 1 or 2 which includes an inlet for fluid feed to said filter cartridge and an outlet for permeate from said bowl.

5. The filtration module of claim 1, 2, 3 or 4, wherein the collar (80) contains a hinge (81;90,91) for attaching the collar (80) to the filter cartridge (84;94).

6. The filtration module of claim 1, 2, 3 or 4, wherein the collar (210) is attached to the cartridge (211) by a snap-fit connection.

7. The filtration module of any one of claims 1 to 6, wherein the filter cartridge contains one or more filtration media selected from the group consisting of flat sheet membrane, spiral wound flat sheet membrane, pleated flat sheet membrane, spiral pleated flat sheet membrane. hollow fiber membrane, depth filter media, particulate media containing an active capture material, ion exchange media, and combinations thereof.

## Patentansprüche

1. Filtrationsmodul, das umfaßt:
einen Verteiler, eine Filterkartusche (84;94;211) und einen Behälter (28), welcher die Filterkartusche aufnimmt,
wobei die Filterkartusche einen Kragen (80;210) umfaßt, der sich radial um den Umfang der Filterkartusche (84;94;211) erstreckt und entfernbar an der Filterkartusche angebracht ist,
wobei der Behälter (28) und die Filterkartusche miteinander verbunden sind, um einen einheitlichen Aufbau zu bilden, indem der Kragen (80;210) an einer Innenseitenwand des Behälters (28) mittels eines Rastsitzes befestigt ist, und
wobei die Filterkartusche (84;94;211) und der Behälter (28) in Fluidverbindung mit dem Verteiler auf eine Weise stehen, die ein Vermischen einer Fluidzufuhr zu der Filterkartusche mit einem aus der Filterkartusche entfernten Permeat verhindert.

2. Filtrationsmodul gemäß Anspruch 1, wobei der Behälter (28) Schlitze (40) besitzt, die an einer Innenoberfläche des Behälters (28) ausgebildet sind, und der Kragen (80) Flansche (88) besitzt, die mit einem Rastsitz in die Schlitze (40) des Behälters (28) eingreifen, wenn die Filterkartusche in dem Behälter eingesetzt ist bzw. wird.

3. Filtrationsmodul gemäß Anspruch 1 oder 2, das einen Einlaß (82) für eine Fluidzufuhr zu dem Behälter und einen Auslaß (86;95) für Permeat von der Filterkartusche umfaßt.

4. Filtrationsmodul gemäß Anspruch 1 oder 2, das einen Einlaß für Fluidzufuhr zu der Filterkartusche und einen Auslaß für Permeat aus dem Behälter umfaßt.

5. Filtrationsmodul gemäß Anspruch 1, 2, 3 oder 4, wobei der Kragen (80) ein Gelenk (81;90;91) zum Anbringen des Kragens (80) an der Filterkartusche (84;94) umfaßt.

6. Filtrationsmodul gemäß Anspruch 1, 2, 3 oder 4, wobei der Kragen (210) an der Kartusche (211) durch eine Rastsitzverbindung angebracht ist.

7. Filtrationsmodul gemäß einem der Ansprüche 1 bis 6, wobei die Filterkartusche ein oder mehrere Filtermedien enthält, die aus der Gruppe ausgewählt sind, die aus einer flachlagigen Membran, einer spiralförmig gewickelten flachlagigen Membran, einer gefältelten flachlagigen Membran, einer spiralförmig gefältelten flachlagigen Membran, einer Hohlfasermembran, Tiefenfiltermedien, ein aktives Auffangmaterial enthaltenden Teilchenmedien, Ionenaustauschmedien und Kombinationen hiervon gebildet ist.

## Revendications

1. Module de filtration qui comprend :
un collecteur, une cartouche filtrante (84 ; 94 ; 211) et un bol (28) qui loge la cartouche filtrante,
dans lequel ladite cartouche filtrante comprend un collier (80) qui s'étend radialement autour de la périphérie de ladite cartouche filtrante (84 ; 94 ; 211) et est fixé de façon détachable à la cartouche filtrante,
dans lequel ledit bol (28) et ladite cartouche filtrante sont réunis pour former une construction unitaire en ce que ledit collier (80 ; 210) est fixé à une paroi latérale interne dudit bol (28) au moyen d'un ajustement par enclenchement, et
dans lequel ladite cartouche filtrante (84 ; 94 ; 211) et le bol (28) sont en communication fluidique avec ledit collecteur d'une manière qui empêche le mélange d'une alimentation en fluide vers ladite cartouche filtrante avec un perméat enlevé de ladite cartouche filtrante.

2. Module de filtration selon la revendication 1, dans lequel ledit bol (28) a des fentes (40) formées sur une surface interne du bol (28), et ledit collier (80) a des brides (88) qui s'ajustent par enclenchement dans les fentes (40) du bol (28) lorsque la cartouche filtrante est calée à l'intérieur dudit bol (28).

3. Module de filtration selon la revendication 1 ou 2 qui comprend une admission (82) pour l'alimentation en fluide vers ledit bol et une sortie (86 ; 95) pour un perméat provenant de ladite cartouche filtrante.

4. Module de filtration selon les revendications 1 ou 2 qui comprend une admission pour l'alimentation en fluide vers ladite cartouche filtrante et une sortie pour un perméat provenant dudit bol.

5. Module de filtration selon la revendication 1, 2, 3 ou 4, dans lequel le collier (80) comprend une charnière (81 ; 90, 91) pour fixer le collier (80) à la cartouche filtrante (84 ; 94).

6. Module de filtration selon la revendication 1, 2, 3 ou 4, dans lequel le collier (210) est fixé à la cartouche (211) par un ajustement par enclenchement.

7. Module de filtration selon l'une quelconque des revendications 1 à 6, dans lequel la cartouche filtrante contient un ou plusieurs milieux de filtration choisis dans le groupe composé d'une membrane à feuille plate, d'une membrane à feuille plate enroulée en spirale, d'une membrane à feuille plate plissée, d'une membrane à feuille plate plissée en spirale, d'une membrane à fibre creuse, de milieux formant filtre en profondeur, de milieux particulaires contenant un matériau d'absorption actif, de milieux d'échange d'ions, et de combinaisons de ceux-ci.
